# DEMANDE DE BREVET EUROPEEN

(11) **EP 2 175 192 A1**
(43) Date de publication de la demande: **14.04.2010**
(21) Numéro de dépôt: 09172355.1
(22) Date de dépôt: 06.10.2009
(51) Int. Cl.: F21S 8/10, F21W 101/02, F21W 101/10, F21W 101/12

(54) **Dispositif d'éclairage et/ou de signalisation pour véhicule automobile**

(30) Priorité: 10.10.2008 FR 0805629
(71) Demandeur: VALEO VISION, 93012 Bobigny (FR)
(72) Inventeur: Collot, Patrice, 39500, PANTIN (FR); Coutin, Alain, 89100, SAINT CLEMENT (FR)

(57) **Abrégé**

L'invention a pour objet un dispositif d'éclairage et/ou de signalisation pour véhicule automobile comprenant, dans un même boîtier, au moins un premier module optique (3), notamment d'éclairage ou de signalisation, disposé à proximité d'un masque ou intégrant un masque (4), et un second module optique, de signalisation (6), situé à côté dudit premier module optique (3), un intervalle (7) existant entre le contour dudit premier module optique (3) et celui dudit masque (4). Un réflecteur auxiliaire (8) est disposé en regard de la source lumineuse (6a) du second module optique de signalisation (6), pour renvoyer de la lumière provenant dudit second module (6) vers la surface interne et/ou le chant du masque (4), surface qui est réfléchissante au moins dans la zone (4a) concernée par les rayons lumineux renvoyés par le réflecteur auxiliaire (8), l'ensemble étant prévu pour que des rayons lumineux provenant du second module de signalisation (6) et réfléchis par ce réflecteur auxiliaire (8) passent, après réflexion sur la surface interne (4a) et/ou le chant du masque (4), par l'intervalle (7) existant entre le premier module d'éclairage (3) et le masque (4).

## Description

L'invention est relative à un dispositif d'éclairage et/ou de signalisation pour véhicule automobile, par exemple un feu ou un projecteur du genre de ceux qui comprennent, dans un même boîtier, plusieurs modules optiques. On comprend sous le terme de module optique un ensemble comprenant au moins une source lumineuse associée à au moins un des éléments/composants optiques choisis parmi, par exemple, les réflecteurs, les lentilles, les écrans, les collimateurs, les bonnettes, et conçu de façon à émettre au moins un faisceau lumineux d'une photométrie donnée. Dans un projecteur, notamment, peuvent co-exister usuellement au moins un module optique destiné à émettre un faisceau de type éclairage (faisceau code, route ...), et au moins un autre module optique d'éclairage ou un module optique de signalisation (module apte à émettre un faisceau de type signalisation, comme un feu de position, un feu diurne aussi appelé DRL pour Day time Running Light ...), lesdits modules étant situés à côté les uns des autres.

Au sein de chacun de ces modules, et/ou entre les différents modules, on a très fréquemment des composants dits « pièces de style » ou encore « masques » ou encore « pièces cosmétiques », qui ont pour fonction première d'assurer une continuité de surface dans un module ou entre le module et les modules voisins ou entre le module et la glace extérieure du projecteur ou du feu, et de camoufler les éléments non esthétiques du type éléments de connectique électrique. On désignera donc ces composants enjoliveurs sous le terme de « masques » dans la suite du texte par soucis de concision. Ces masques peuvent entourer complètement un module, ou seulement une partie de celui-ci, ils peuvent faire partie du module, ou être dans le boîtier hors des modules à proprement parlé. Ils peuvent être fixés à un module, ou encore à une platine support du boîtier du projecteur ou du feu.

L'invention concerne plus particulièrement le cas d'un module optique de signalisation, par exemple constitué par un indicateur de direction ou un feu diurne, dans un projecteur automobile.

Lorsque le module de signalisation, en particulier l'indicateur de direction, se trouve en retrait d'un autre module, par exemple d'un module optique d'éclairage, notamment du côté aile du véhicule, une occultation peut être créée par le masque associé audit module d'éclairage. L'inclinaison, par rapport à l'axe longitudinal du véhicule, des rayons lumineux émis du côté projecteur se trouve ainsi limitée. Dans le cas d'un indicateur de direction, un minimum d'intensité est requis suivant une direction inclinée à 45° vers l'intérieur par rapport à l'axe longitudinal du véhicule. Ce minimum est difficilement, ou pas, atteint lorsque le module de signalisation est ainsi « enfoncé » par rapport au module d'éclairage. II faut alors prévoir des moyens supplémentaires, par exemple des stries sur la glace de fermeture du boîtier, pour dévier une partie des rayons lumineux vers l'intérieur. La présence de telles stries rend parfois la réalisation de la fonction impossible ou n'est pas souhaitée, en particulier pour des raisons de style.

L'invention a pour but, notamment, de fournir un dispositif d'éclairage et/ou de signalisation du genre défini précédemment qui permette d'obtenir pour le module de signalisation la photométrie voulue, notamment une intensité lumineuse suffisante selon des directions inclinées du côté de l'autre module, par exemple d'éclairage, généralement du côté intérieur éloigné de l'aile du véhicule.

L'invention a pour objet un dispositif d'éclairage et/ou de signalisation pour véhicule automobile comprenant, dans un même boîtier, au moins un premier module optique, notamment d'éclairage ou de signalisation, disposé à proximité d'un masque ou intégrant un masque, et un second module optique, de signalisation, situé à côté dudit premier module optique, un intervalle existant entre le contour dudit premier module optique et celui dudit masque. Un réflecteur auxiliaire est disposé en regard de la source lumineuse du second module optique de signalisation, pour renvoyer de la lumière provenant dudit second module vers la surface interne et /ou le chant du masque, surface qui est réfléchissante au moins dans la zone concernée par les rayons lumineux renvoyés par le réflecteur auxiliaire, l'ensemble étant prévu pour que des rayons lumineux provenant du second module de signalisation et réfléchis par ce réflecteur auxiliaire passent, après réflexion sur la surface interne et/ou le chant du masque, par l'intervalle existant entre le premier module d'éclairage et le masque, notamment afin de compléter le faisceau du module de signalisation.

La zone réfléchissante de la face interne ou du chant du masque peut être rendue réfléchissante grâce à un revêtement réfléchissant (éventuellement donc sur un substrat de type polymère), soit du fait du matériau constitutif même du masque (de l'aluminium, poli par exemple ou dont l'état de surface est réfléchissant).

De préférence, le réflecteur auxiliaire comprend ou est constitué par une portion de surface sensiblement parabolique dont le foyer est situé sur, ou au voisinage de, la source lumineuse du second module, c'est-à-dire le module de signalisation.

Selon une variante, cette portion de surface au moins peut être munie de pavés réfléchissants.

Le module de signalisation est généralement disposé vers l'extérieur par rapport au projecteur lorsque le dispositif d'éclairage est en place dans le véhicule. On dispose alors le réflecteur auxiliaire vers l'intérieur par rapport au module de signalisation, l'angle du faisceau du module de signalisation étant élargi du côté intérieur où se trouve le premier module, c'est-à-dire le module adjacent.

Ce réflecteur peut donc comporter des éléments optiques renvoyant au mieux la lumière vers l'intérieur du masque.

Avantageusement, la surface interne du masque (et/ou son chant) comporte, dans sa partie concernée par les rayons lumineux renvoyés par le réflecteur auxiliaire, des pavés réfléchissants pour augmenter l'angle du faisceau du côté du premier module optique.

L'ouverture supplémentaire du faisceau du module de signalisation provoquée par la double réflexion des rayons, d'abord sur le réflecteur additionnel puis sur la face intérieure du masque, est donc destinée à complémenter le faisceau de signalisation du second module, ce qui est tout particulièrement avantageux quand il s'agit d'un faisceau de type indicateur de direction, afin d'atteindre l'amplitude angulaire jusqu'à 45° requise par les réglementations.

De façon plus générale, l'invention vise donc à compléter le faisceau lumineux principal émis par le second module, à l'élargir, ou à ajouter de la lumière dans celui-ci.

Le réflecteur auxiliaire peut être solidaire du masque, ce qui présente l'avantage d'avoir un positionnement relatif très sûr des deux pièces, assurant ainsi une récupération maximale des rayons atteignant le réflecteur additionnel par la zone dédiée du masque adjacent.

Comme évoqué plus haut, le masque en question peut lui-même être fixé à / monté solidaire du premier ou du second module, ou encore d'une platine support montée dans le boîtier du projecteur.

Selon une variante, des rayons provenant de la source lumineuse du second module peuvent aussi atteindre directement la zone réfléchissante de la paroi interne et/ ou du chant du masque, toujours dans le même but de compléter le faisceau émis par le second module. On peut aussi prévoir que certains de ces rayons traversent d'abord un élément optique non réfléchissant, du type bonnette/écran, éventuellement munie de prismes, avant de se diriger vers la surface réfléchissante du masque. Une variante est aussi de ne pas utiliser de réflecteur additionnel du tout, tous les rayons arrivant sur le masque directement ou via des composants optiques non réfléchissants.

Selon un exemple non limitatif, le masque entoure partiellement ou complètement le premier module.

Selon une des variantes de l'invention, c'est la surface interne du masque qui est ainsi fonctionnalisée, avec cette surface réfléchissante, c'est-à-dire la surface qui, usuellement, n'est pas celle qui est visible de l'extérieur du projecteur ou du feu, c'est-à-dire la surface opposée à la face visible du masque. Ainsi, on ne modifie pas le style, l'aspect éteint ou allumé du projecteur ou du feu.

Selon une autre variante, qui peut se combiner avec la précédente, c'est le chant, le bord, du masque qui est ainsi fonctionnalisé : la surface est moindre, mais peut suffire selon la quantité de lumière qu'il faut ajouter au faisceau principal du second module.

L'invention consiste, mises à part les dispositions exposées ci-dessus, en un certain nombre d'autres dispositions dont il sera plus explicitement question ci-après à propos d'un exemple de réalisation décrit avec référence au dessin annexé, mais qui n'est nullement limitatif. Sur ce dessin :
Fig. 1 est une vue schématique en plan, avec parties coupées, d'un dispositif d'éclairage selon l'invention, et
Fig. 2 est une vue en coupe horizontale schématique à plus grande échelle du dispositif d'éclairage.

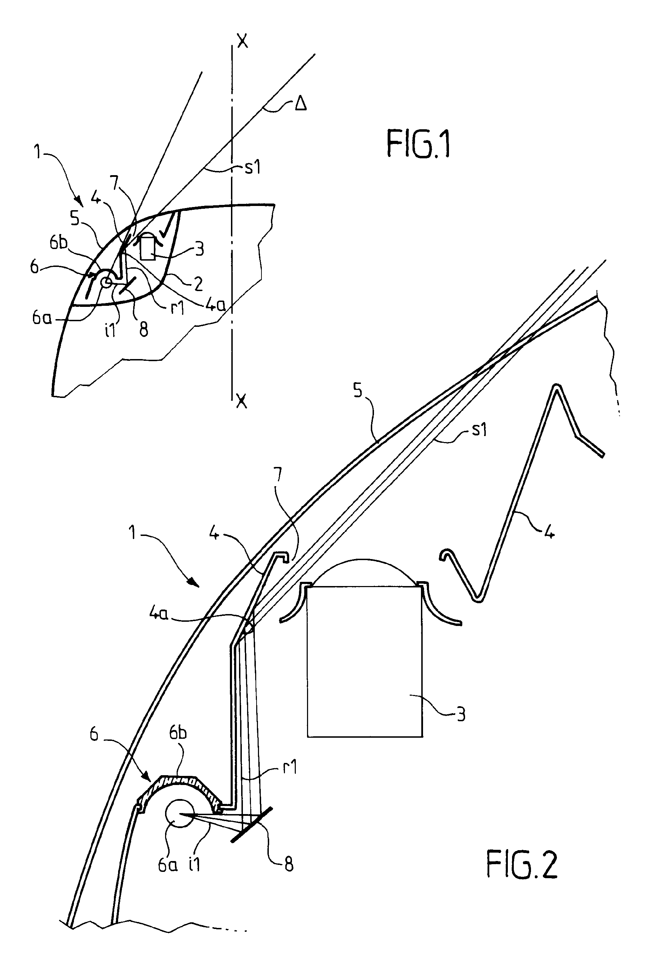

En se reportant à Fig. 1 du dessin, on peut voir schématiquement représentée la partie avant gauche d'un véhicule automobile équipé d'un dispositif d'éclairage 1 comprenant, dans un même boîtier 2, au moins un projecteur lumineux 3 entouré par un masque 4 dont la surface extérieure et généralement aussi la surface intérieure sont revêtues d'une couche réfléchissante, par exemple une couche d'aluminium. Dans l'exemple représenté, le projecteur 3 est un projecteur elliptique. Le boîtier 2 est fermé, vers l'avant, par une glace 5 qui peut être réalisée en verre ou en matière plastique transparente. L'axe longitudinal du véhicule est représenté par la droite X-X.

Le dispositif d'éclairage 1 comporte également un feu de signalisation ou d'éclairage 6 constitué dans l'exemple considéré par un indicateur de direction, ou clignotant, situé en retrait et sur un côté du projecteur 3. Généralement, comme représenté sur Fig. 1, l'indicateur de direction 6 est situé vers l'extérieur par rapport au projecteur 3, c'est-à-dire du côté de l'aile du véhicule. L'indicateur de direction 6 comporte une lampe 6a constituant la source lumineuse. L'indicateur de direction 6 peut en outre comporter, en avant de la lampe 6a selon le sens de propagation des rayons lumineux, une optique 6b, également appelée bonnette, pour former un faisceau. Un intervalle 7 existe entre le contour du projecteur 3 et celui du masque 4.

Pour un indicateur de direction, un minimum d'intensité, de 0,3 Cd, est requis suivant une direction Δ inclinée de 45° vers l'intérieur par rapport à l'axe longitudinal X-X. L'indicateur de direction 6 étant enfoncé côté aile, en retrait du projecteur 3, l'occultation par le masque 4 ne permet pas d'atteindre vers l'intérieur ce minimum d'intensité, sans moyen complémentaire.

Pour obtenir un éclairement suffisant vers l'intérieur, selon l'invention, un réflecteur auxiliaire 8 est disposé sur le côté projecteur de l'indicateur de direction 6. Autrement dit, le réflecteur 8 est situé, par rapport à une droite parallèle à l'axe X-X passant par le centre de la lampe 6a, du même côté que le projecteur 3. Le réflecteur auxiliaire 8 est constituée par une portion de surface sensiblement parabolique (munie éventuellement de pavés optique) dont le foyer est situé sur, ou au voisinage de, la source lumineuse 6a de l'indicateur de direction. Le réflecteur auxiliaire 8 est disposé pour capter la lumière émise par la source 6a vers l'intérieur, en arrière du masque 4, et pour renvoyer la lumière vers l'avant, entre le projecteur elliptique 3 et le masque. Le réflecteur auxiliaire 8 peut être solidaire du masque.

La surface interne du masque 4 est réfléchissante, au moins dans la zone 4a concernée par les rayons lumineux renvoyés par le réflecteur auxiliaire 8. L'ensemble est prévu pour que les rayons lumineux provenant de l'indicateur de direction 6, réfléchis par le réflecteur 8 puis par la surface interne 4a du masque, passent par l'intervalle 7 existant entre le projecteur 3 et le masque 4 pour compléter le faisceau de l'indicateur de direction selon la direction Δ inclinée vers l'intérieur, et ainsi élargir l'angle du faisceau.

Sur le dessin, on peut suivre le trajet d'un rayon lumineux i1 issu de la source 6a, réfléchi suivant r1 par le réflecteur auxiliaire 8 et renvoyé suivant un rayon sortant s1 par la zone 4a de la surface interne du masque.

On peut prévoir, dans la zone 4a du masque, des éléments réfléchissants, en particulier des pavés, pour augmenter l'angle des rayons vers l'intérieur, du côté du projecteur.

L'invention permet ainsi d'élargir le faisceau du feu de signalisation sans qu'il soit nécessaire de prévoir des stries sur la glace 5. Toutefois, si de telles stries sont souhaitées, elles peuvent être présentes et se combiner avec la disposition de l'invention.

La description qui précède a été effectuée à propos d'un module optique de signalisation formé par un indicateur de direction situé à l'avant du véhicule. L'invention peut s'appliquer bien entendu à d'autres types de faisceau, émis par d'autres types de modules de signalisation ou d'éclairage, éventuellement situés à l'arrière du véhicule, dans des feux et non plus dans des projecteurs.

L'exemple décrit à l'aide des figures concerne plus spécifiquement une configuration où le premier et le second module se trouvent à côté l'un de l'autre, l'un étant en arrière de l'autre, si l'on considère l'axe longitudinal du véhicule. II va de soi que l'invention ne se limite pas à une telle configuration relative, et qu'elle s'applique également, notamment, à des modules qui seraient voisins, mais avec l'un des modules au dessus de l'autre, ou à des configurations où la position entre premiers et seconds modules est inversée.

## Revendications

1. Dispositif d'éclairage et/ou de signalisation pour véhicule automobile comprenant, dans un même boîtier, au moins un premier module optique (3), notamment d'éclairage ou de signalisation, disposé à proximité d'un masque ou intégrant un masque (4), et un second module optique, de signalisation (6), situé à côté dudit premier module optique (3), un intervalle (7) existant entre le contour dudit premier module optique (3) et celui dudit masque (4), **caractérisé en ce qu'**un réflecteur auxiliaire (8) est disposé en regard de la source lumineuse (6a) du second module optique de signalisation (6), pour renvoyer de la lumière provenant dudit second module (6) vers la surface interne et/ou le chant du masque (4), surface qui est réfléchissante au moins dans la zone (4a) concernée par les rayons lumineux renvoyés par le réflecteur auxiliaire (8), l'ensemble étant prévu pour que des rayons lumineux provenant du second module de signalisation (6) et réfléchis par ce réflecteur auxiliaire (8) passent, après réflexion sur la surface interne (4a) et/ou le chant du masque (4), par l'intervalle (7) existant entre le premier module d'éclairage (3) et le masque (4), notamment afin de compléter le faisceau du module de signalisation (6).

2. Dispositif selon la revendication précédente, **caractérisé en ce que** des rayons lumineux provenant du second module de signalisation (6) atteignent également directement la surface réfléchissante sur la face interne et/ou le chant (4a) du masque (4), pour une réflexion sur ladite surface puis passage desdites rayons par l'intervalle (7), notamment afin de compléter le faisceau du module de signalisation (6).

3. Dispositif selon l'une des revendications précédentes, **caractérisé en ce que** le réflecteur auxiliaire (8) est constitué par une portion de surface sensiblement parabolique, éventuellement munie de pavés réfléchissants, dont le foyer est situé sur, ou au voisinage de, la source lumineuse (6a) du second module de signalisation (6).

4. Dispositif selon l'une des revendications précédentes, avec le second module de signalisation (6) disposé vers l'extérieur par rapport au premier module optique (3), **caractérisé en ce que** le réflecteur auxiliaire (8) est disposé vers l'intérieur par rapport au second module de signalisation (6), l'angle du faisceau dudit second module (6) étant élargi du côté intérieur où se trouve le premier module optique (3).

5. Dispositif selon l'une des revendications précédentes**, caractérisé en ce que** la surface interne et/ou le chant du masque (4) comporte, dans sa partie (4a) concernée par les rayons lumineux renvoyés par le réflecteur auxiliaire (8), des pavés réfléchissants pour augmenter l'angle du faisceau de signalisation du côté du premier module optique (3).

6. Dispositif selon l'une des revendications précédentes, **caractérisé en ce que** le réflecteur auxiliaire (8) est solidaire du masque (4).

7. Dispositif selon l'une des revendications précédentes, **caractérisé en ce que** le second module de signalisation (6) est un indicateur de direction (6).

8. Dispositif selon l'une des revendications 1 à 6, prévu pour se trouver à l'avant d'un véhicule, **caractérisé en ce que** le second module de signalisation (6) est un feu diurne (DRL).
